(19) Europäisches Patentamt / European Patent Office / Office européen des brevets

(11) **EP 1 763 699 B1**

(12) **FASCICULE DE BREVET EUROPEEN**

(45) Date de publication et mention
de la délivrance du brevet:
**10.08.2011 Bulletin 2011/32**

(51) Int Cl.:
***G02C 7/08*** *(2006.01)*     ***G02C 7/10*** *(2006.01)*
***G02F 1/1333*** *(2006.01)*

(21) Numéro de dépôt: **05783793.2**

(22) Date de dépôt: **24.06.2005**

(86) Numéro de dépôt international:
**PCT/FR2005/001610**

(87) Numéro de publication internationale:
**WO 2006/013250 (09.02.2006 Gazette 2006/06)**

(54) **PROCEDE DE REALISATION D'UN ELEMENT OPTIQUE TRANSPARENT, COMPOSANT OPTIQUE INTERVENANT DANS CE PROCEDE ET ELEMENT OPTIQUE AINSI OBTENU**

VERFAHREN ZUR HERSTELLUNG EINES TRANSPARENTEN OPTISCHEN ELEMENTS, OPTISCHE KOMPONENTE DIESES VERFAHRENS UND AUF DIESE WEISE HERGESTELLTES OPTISCHES ELEMENT

METHOD FOR PRODUCING A TRANSPARENT OPTICAL ELEMENT, AN OPTICAL COMPONENT INVOLVED INTO SAID METHOD AND THE THUS OBTAINED OPTICAL ELEMENT

(84) Etats contractants désignés:
**AT BE BG CH CY CZ DE DK EE ES FI FR GB GR HU IE IS IT LI LT LU MC NL PL PT RO SE SI SK TR**

(30) Priorité: **02.07.2004 FR 0407387**
**17.12.2004 FR 0413537**

(43) Date de publication de la demande:
**21.03.2007 Bulletin 2007/12**

(60) Demande divisionnaire:
**11153684.3 / 2 312 376**

(73) Titulaire: **ESSILOR INTERNATIONAL (COMPAGNIE GENERALE D'OPTIQUE) 94220 Charenton-le-Pont (FR)**

(72) Inventeurs:
• **CANO, Jean-Paul**
**c/o Essilor International**
**F-94220 Charenton-Le-Pont (FR)**
• **BOVET, Christian**
**c/o Essilor International**
**F-94220 Charenton-Le-Pont (FR)**

(74) Mandataire: **Cabinet Plasseraud**
**52, rue de la Victoire**
**75440 Paris Cedex 09 (FR)**

(56) Documents cités:
**WO-A-03/012542     DE-A1- 19 714 434**
**US-A- 5 067 795     US-A1- 2002 140 899**
**US-A1- 2003 152 849**

# Description

La présente invention concerne la réalisation d'éléments transparents incorporant des fonctions optiques. Elle s'applique notamment à la réalisation de verres ophtalmiques ayant diverses propriétés optiques.

Les verres correcteurs d'amétropie sont traditionnellement fabriqués en mettant en forme un matériau transparent d'indice de réfraction plus élevé que l'air. La forme des verres est choisie de façon que la réfraction aux interfaces entre le matériau et l'air provoque une focalisation appropriée sur la rétine du porteur. Le verre est généralement découpé pour être adapté à une monture, avec un positionnement approprié par rapport à la pupille de l'oeil corrigé.

Il est connu de faire varier l'indice de réfraction au sein du matériau d'une lentille ophtalmique, ce qui peut limiter les contraintes géométriques (voir par exemple EP-A-O 728 572). Cette méthode a surtout été proposée pour des lentilles de contact. Le gradient d'indice est obtenu par exemple par diffusion, irradiation sélective ou chauffage sélectif au cours de la fabrication de l'objet solide constituant la lentille. Si on prévoit une fabrication pour chaque cas d'amétropie traitable, la méthode ne se prête pas bien à une large industrialisation. Sinon, on peut fabriquer industriellement des séries d'objets à gradient d'indice, sélectionner celui qui est le plus proche de ce qui convient à un oeil à corriger et le remettre en forme par usinage et polissage pour l'adapter à cet oeil. Dans ce cas, la nécessité de remettre en forme les verres fait perdre beaucoup de l'attrait de la méthode par rapport aux méthodes traditionnelles.

Dans la demande de brevet US 2004/0008319, il est proposé de réaliser une modulation d'indice de réfraction parallèlement à la surface d'une lentille telle qu'un verre de lunettes, à l'aide de têtes de projection d'encre du genre employé dans les imprimantes. Ces têtes sont commandées pour déposer des gouttes de solutions de polymères d'indices différents sur la surface de l'objet de façon à obtenir une variation souhaitée de l'indice le long de la surface. Les polymères sont ensuite solidifiés par irradiation ou élimination de solvant. La maîtrise des phénomènes physiques d'interaction entre les gouttes et le substrat lors du dépôt et de la solidification rend cette méthode très difficile à pratiquer. En outre, sa mise en oeuvre à grande échelle est problématique car, là aussi, la modulation d'indice est obtenue au cours de la fabrication de l'objet solide constituant la lentille et la personnalisation ultérieure suppose une remise en forme du verre.

Un autre domaine d'application de l'invention est celui des verres photochromiques. La structure d'un tel verre incorpore une couche dont le spectre d'absorption lumineuse dépend de la lumière reçue. Le colorant photochromique de cette couche est habituellement solide, bien qu'on sache que les liquides ou les gels présentent des propriétés supérieures, notamment en termes de rapidité de réaction aux variations de luminosité.

On connaît tout de même des verres dans lesquels le colorant photosensible est un liquide ou un gel, des espaceurs étant prévus dans l'épaisseur de la couche pour définir le volume occupé par le colorant entre les couches transparentes adjacentes, avec une barrière étanche sur la périphérie de ce volume. Un tel verre est fabriqué pour une monture de lunettes spécifique. Il n'est pas possible de le découper pour l'adapter à une autre monture. Il est en outre difficile de l'adapter à l'amétropie d'un oeil à corriger.

Il peut aussi être intéressant de faire varier l'absorption lumineuse parallèlement à la surface du verre, et/ou de rendre cette absorption dépendante de la polarisation de la lumière.

Parmi les autres types de verres ophtalmiques auxquels l'invention peut s'appliquer, on peut citer les systèmes actifs, dans lesquels une variation d'une propriété optique résulte d'un stimulus électrique. C'est le cas des verres électrochromes, ou encore des verres à propriétés réfractives modulables (voir par exemple US-A-5 359 444 ou WO 03/077012). Ces techniques font généralement appel à des cristaux liquides ou à des systèmes électrochimiques.

Parmi ces différents types de verres, ou d'autres non nécessairement limités à l'optique ophtalmique, il serait souhaitable de pouvoir proposer une structure qui permette de mettre en place une ou plusieurs fonction(s) optique(s) de façon souple et modulaire, tout en conservant la possibilité de découper l'élément optique obtenu en vue de l'intégrer à une monture imposée ou choisie par ailleurs, ou à tout autre moyen de maintien dudit élément optique.

Un but de la présente invention est de répondre à ce besoin. Un autre but est que l'élément optique soit industrialisable dans de bonnes conditions.

L'invention propose ainsi un procédé de réalisation d'un élément optique transparent selon la revendication 1 et un élément optique selon la revendication 31.

Les cellules peuvent être remplies avec des substances diverses choisies pour leurs propriétés optiques, par exemple liées à leur indice de réfraction, à leur capacité d'absorption lumineuse ou de polarisation, à leur réponse à des stimuli électriques ou lumineux, etc.

La structure se prête donc à de nombreuses applications, particulièrement celles faisant appel à des fonctions optiques évoluées. Elle implique une discrétisation par pixels de la surface de l'élément optique, ce qui offre une grande souplesse dans la conception mais aussi dans la mise en oeuvre de l'élément.

En particulier, il est remarquable que le composant optique puisse être découpé selon des formes périphériques souhaitées, permettant son intégration et son adaptation sur divers supports de maintien tels que, par exemple, une monture ou un casque. Le procédé peut aussi comprendre, sans affecter l'intégrité de la structure, une étape de perçage à travers le composant optique, pour la fixation de l'élément optique sur son support de maintien.

La couche constituée par l'ensemble de cellules aura avantageusement une hauteur inférieure à 100 μm. Selon différents modes de réalisation de l'invention, cette hauteur est préférentiellement comprise entre 10 μm et 50 μm, ou comprise entre 1 μm et 10 μm. En particulier, elle peut être égale à 5 μm environ.

Dans le cadre de l'invention, l'ensemble de cellules juxtaposées est de préférence configuré de façon à ce que le facteur de remplissage τ, défini comme la surface occupée par les cellules remplies par la substance, par unité de surface du composant, soit supérieur à 90 %. En d'autres termes, les cellules de l'ensemble occupent au moins 90 % de la surface du composant, du moins dans une région du composant pourvue de l'ensemble de cellules. D'une façon avantageuse le facteur de remplissage est compris entre 90 % et 99,5 % inclus, et encore plus préférentiellement le facteur de remplissage est compris entre 96 % et 98,5 % inclus.

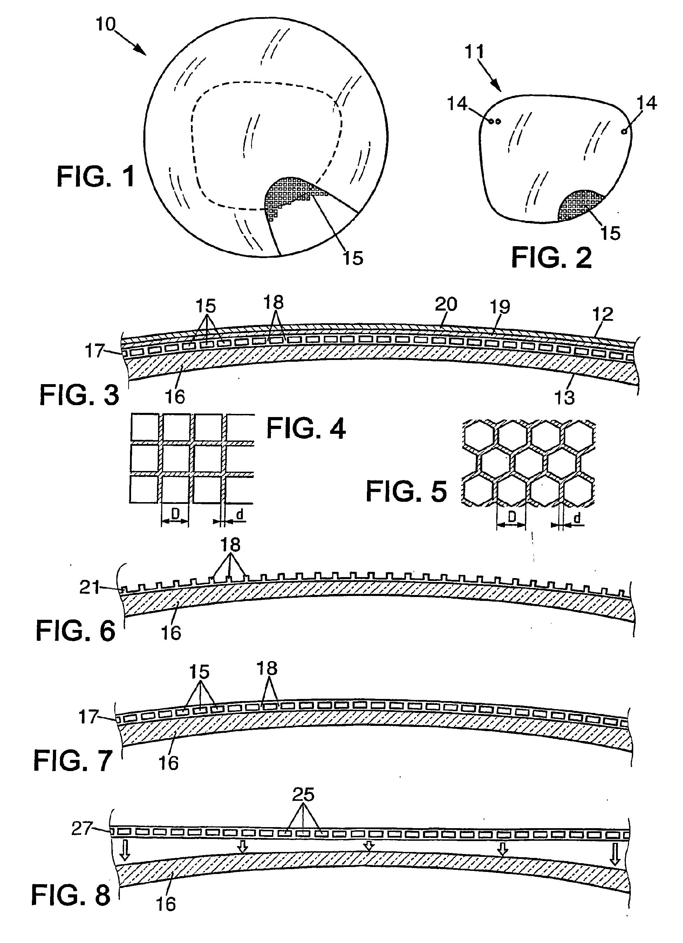

Pour que la structure de pixels ne provoque pas de phénomènes indésirables de diffraction, il est possible de dimensionner les cellules de façon adaptée par rapport aux longueurs d'onde du spectre de la lumière considérée. La géométrie du réseau de cellules se caractérise par des paramètres dimensionnels qui peuvent généralement se ramener aux dimensions des cellules parallèlement à la surface du composant optique, à leur hauteur correspondant à la hauteur h des parois qui les séparent, et à l'épaisseur d de ces parois, mesurée parallèlement à la surface du composant. Les dimensions des cellules parallèlement à la surface définissent l'aire σ d'une cellule. Dans le cas simple où les cellules sont carrées avec des côtés de longueur D (figure 4), cette aire est donnée par σ = D², et le facteur de remplissage est de l'ordre de $\tau = \dfrac{D^2}{(D+d)^2}$. Les expressions de σ et τ sont aisément obtenues pour toute autre organisation spatiale des cellules.

La principale source de défauts présente dans un réseau de cellules peut être constituée par le réseau de parois. Ces parois sont à l'origine d'un défaut de transparence du composant optique. Au sens de l'invention, on entend qu'un composant optique est transparent lorsque l'observation d'une image au travers de ce composant optique est perçue sans perte significative de contraste, c'est-à-dire lorsque la formation d'une image au travers du composant optique est obtenue sans nuisance de la qualité de l'image. Ainsi, les parois qui séparent les cellules du composant optique interagissent avec la lumière, en la diffractant. Au sens de l'invention, la diffraction est définie comme le phénomène d'éparpillement de la lumière que l'on observe lorsqu'une onde lumineuse est matériellement limitée ("Optique - Fondement et applications" - J.P. Pérez - Dunod - 7eme édition - Paris 2004 - Page 262). Plus spécifiquement, l'énergie de la lumière qui rencontre une paroi est concentrée dans un angle solide. De ce fait, la perception d'un point lumineux n'est plus un point au travers d'un composant optique qui comprend de telles parois. Cette diffraction microscopique se traduit macroscopiquement par de la diffusion. Cette diffusion macroscopique, ou diffusion incohérente, se traduit par un effet laiteux de la structure pixellisée du composant optique, et donc par une perte de contraste d'une l'image observée à travers la structure. Cette perte de contraste est assimilable à une perte de transparence, telle que définie précédemment. Un tel effet de diffusion macroscopique n'est pas acceptable pour un élément optique réalisé à partir d'un composant optique pixellisé au sens de l'invention, notamment pour une lentille ophtalmique qui doit être transparente et ne comporter aucun défaut cosmétique qui puisse gêner la vision du porteur de cette lentille. Un dimensionnement judicieux des cellules peut réduire l'énergie diffractée par les parois.

Ainsi dans le cadre de l'invention, on pourra donner aux cellules des dimensions supérieures à 1 μm parallèlement à la surface du composant. En particulier, ces dimensions de cellules parallèlement à la surface du composant peuvent être comprises entre 5 μm et 100 μm. Dans l'application à l'optique ophtalmique, on peut souhaiter éviter des cellules trop grandes qui donnerait lieu à une texture visible à la surface des verres. D'une façon avantageuse, les cellules pourront présenter une dimension comprise entre 10 μm et 40 μm.

Parallèlement à la surface du composant, les cellules seront de préférence séparées par des parois d'épaisseur comprise entre 0,10 μm et 5 μm. Dans un premier mode de réalisation de l'invention, les parois ont une épaisseur comprise entre 0,10 μm et 5 μm, et préférentiellement comprise entre 0,10 μm et 0,35 μm, de sorte qu'elles aussi ne produisent quasiment pas d'effets diffractifs indésirables dans le spectre visible. De telles parois fines peuvent procurer un facteur de remplissage τ très élevé de la surface optique par la substance à propriété otique intéressante.

Dans un second mode de réalisation, les parois ont une épaisseur comprise entre 0,40 μm et 2,00 μm. Cette épaisseur peut être égale à 1,00 μm par exemple. Dans un troisième mode de réalisation, les parois ont une épaisseur comprise entre 2,00 μm et 3,5 μm, pouvant être, par exemple, égale à 3,0 μm. Le matériau constituant les parois des cellules sera choisi de telle manière que les cellules ne seront plus discernables du matériau de remplissage desdites cellules. Par non discernable, on entend sans diffusion visible, sans diffraction visible, et sans réflexions parasites. En particulier, ceci peut être réalisé pratiquement par un ajustement convenable de l'indice de réfraction et de l'absorption.

L'ensemble de cellules peut être formé directement sur un support transparent rigide, ou au sein d'un film transparent souple reporté ensuite sur un support transparent rigide. Ledit support transparent rigide peut être convexe, concave, ou plan sur le côté recevant l'ensemble des cellules.

Dans un mode de réalisation du procédé, la substance à propriété optique contenue dans certaines au moins des cellules est sous forme de liquide ou de gel. Ladite substance peut notamment présenter au moins une des propriétés optiques choisies parmi la coloration, le photochromisme, la polarisation et l'indice de réfraction.

Elle peut notamment être sous forme de liquide ou de gel et incorporer un colorant photochromique, ce qui permet de réaliser commodément un élément photochromique à réponse très rapide.

Pour l'application à la fabrication de lentilles correctrices, il convient que des cellules différentes du composant optique contiennent des substances d'indice de réfraction différent. L'indice de réfraction sera typiquement adapté pour varier le long de la surface du composant en fonction de l'amétropie estimée d'un oeil à corriger.

Pour l'application à la fabrication de lentilles optiques présentant une propriété optique de polarisation, les cellules du composant optique renfermeront notamment des cristaux liquides associés ou non à des colorants.

Un objet de la présente invention est également un procédé de production d'un composant optique tel que défini précédemment, qui comprend la formation sur un substrat d'un réseau de parois pour délimiter les cellules parallèlement à ladite surface du composant, un remplissage collectif ou individuel des cellules avec la substance à propriété optique sous forme de liquide ou de gel, et la fermeture des cellules sur leur côté opposé au substrat.

L'ensemble de cellules du composant optique peut inclure plusieurs groupes de cellules contenant des substances différentes. De même chaque cellule peut être remplie avec une substance présentant une ou plusieurs propriétés optiques telles que décrites précédemment. Il est également possible d'empiler plusieurs ensembles de cellules sur l'épaisseur du composant. Dans ce mode de réalisation les ensembles de cellules peuvent avoir des propriétés identiques ou différentes au sein de chaque couche, ou les cellules au sein de chaque ensemble de cellules peuvent également présenter des propriétés optiques différentes. Ainsi il est possible d'envisager d'avoir une couche dans laquelle l'ensemble de cellules contient une substance permettant d'obtenir une variation de l'indice de réfraction et une autre couche ou l'ensemble de cellules contient une substance à propriété photochromique.

Un autre aspect de l'invention se rapporte à un composant optique, utilisé dans le procédé ci-dessus. Ce composant optique comprend au moins un ensemble transparent de cellules juxtaposées parallèlement à une surface du composant. Chaque cellule est hermétiquement fermée et contient une substance à propriété optique. Les cellules sont préférablement séparées par des parois de hauteur inférieure à 100 $\mu$m, avantageusement

inférieure à 50 $\mu$m, et peuvent avoir des dimensions supérieures à 1 $\mu$m, parallèlement à la surface du composant.

Un autre aspect encore de l'invention se rapporte à un élément optique transparent, notamment un verre de lunettes, réalisé en découpant un tel composant optique.

D'autres particularités et avantages de la présente invention apparaîtront dans la description ci-après d'exemples de réalisation non limitatifs, en référence aux dessins annexés, dans lesquels :

- la figure 1 est une vue de face d'un composant optique selon l'invention ;

- la figure 2 est une vue de face d'un élément optique obtenu à partir de ce composant optique ;

- la figure 3 est une vue schématique en coupe d'un composant optique selon l'invention ;

- les figures 4 et 5 sont des schémas montrant deux types de maillage utilisables pour agencer les cellules dans un composant optique selon l'invention ;

- les figures 6 et 7 sont des vues schématiques en coupe montrant ce composant optique à deux étapes de sa fabrication;

- la figure 8 est une vue schématique en coupe illustrant un autre mode de fabrication d'un composant optique selon l'invention.

Le composant optique 10 représenté sur la figure 1 est une ébauche pour verre de lunettes. Un verre de lunette comprend une lentille ophtalmique. Par lentille ophtalmique, on entend les lentilles s'adaptant à une monture de lunette pour protéger l'oeil et/ou corriger la vue, ces lentilles étant choisies parmi les lentilles afocales, unifocales, bifocales, trifocales et progressives.

Si l'optique ophtalmique est un domaine d'application préféré de l'invention, on comprendra que cette invention est applicable à des éléments optiques transparents d'autres natures, comme par exemple des lentilles pour instruments d'optiques, des filtres, des lentilles de visée optique, des visières oculaires, des optiques de dispositifs d'éclairage, etc. Au sein de l'invention, on inclut dans l'optique ophtalmique les lentilles ophtalmiques, mais aussi les lentilles de contact et les implants oculaires.

La figure 2 montre un verre de lunette 11 obtenu en découpant l'ébauche 10 suivant un contour prédéfini, représenté en trait interrompu sur la figure 1. Ce contour est a priori arbitraire, dès lors qu'il s'inscrit dans l'étendue de l'ébauche. Des ébauches fabriquées en série sont ainsi utilisables pour obtenir des verres adaptables à une grande variété de montures de lunettes. Le bord du verre découpé peut sans problème être détouré, de façon classique, pour lui conférer une forme adaptée à la monture et au mode de fixation du verre sur cette monture et/ou pour des raisons esthétiques. Il est également possible d'y percer des trous 14, par exemple pour recevoir des vis servant à sa fixation sur la monture.

La forme générale de l'ébauche 10 peut être conforme aux standards de l'industrie, avec par exemple un contour circulaire de diamètre 60 mm, une face avant convexe 12 et une face arrière concave 13 (figure 3). Les outils traditionnels de découpe, de détourage et de perçage peuvent ainsi être utilisés pour obtenir le verre 11 à partir de l'ébauche 10.

Sur les figures 1 et 2, un arrachement partiel des couches superficielles fait apparaître la structure pixellisée de l'ébauche 10 et du verre 11. Cette structure consiste en un réseau de cellules ou microcuves 15 formées dans une couche 17 du composant transparent (figure 3). Sur ces figures, les dimensions de cette couche 17 et des cellules 15 ont été exagérées par rapport à celles de l'ébauche 10 et de son substrat 16 afin de faciliter la lecture du dessin.

Les dimensions latérales D des cellules 15 (parallèlement à la surface de l'ébauche 10) sont supérieures au micron pour éviter les phénomènes de diffraction dans le spectre visible. En pratique, ces dimensions sont comprises entre 10 $\mu$m et 100 $\mu$m. Il en résulte que le réseau de cellules est réalisable avec des technologies bien maîtrisées dans le domaine de la microélectronique ou des dispositifs micromécaniques.

Il est alors possible que le réseau de cellules ne soit pas visible sur le verre 11 ou sur l'ébauche 10.

Selon l'invention, la hauteur h de la couche 17 qui incorpore le réseau de cellules 15 est de préférence inférieure à 100 $\mu$m, et plus préférentiellement comprise entre 1 $\mu$m et 10 $\mu$m inclus. Avantageusement, cette hauteur h est d'environ 5 $\mu$m.

Les parois 18 séparant les cellules 15 assurent leur étanchéité mutuelle. Elles ont une épaisseur d comprise entre 0,10 $\mu$m et 5,00 $\mu$m inclus, permettant notamment d'obtenir un facteur de remplissage élevé du composant optique. Cette épaisseur de parois peut être égale, par exemple, à 0,35 $\mu$m environ. Un facteur de remplissage élevé procure une bonne efficacité de la fonction optique recherchée, fournie par la substance contenue dans les cellules 15. Ce facteur de remplissage est compris entre 90 % et 99,5 % inclus, avantageusement compris entre 96 % et 98,5 % inclus. Une combinaison judicieuse des paramètres de dimension latérale (D) des cellules et d'épaisseur (d) et de hauteur (h) des parois séparant les cellules, permet d'obtenir un composant optique présentant un taux de remplissage élevé, non visible en fonction de la ou des propriétés optiques des substances contenues dans lesdites cellules.

Par exemple, avec des cellules agencées selon un maillage carré (figure 4) ou hexagonal (figure 5), des parois 18 d'épaisseur d = 2 $\mu$m et des pixels de dimension D = 100 $\mu$m, 4 % seulement de la surface est absorbante ($\tau \approx$ 96 %). Pour des parois 18 d'épaisseur d = 1 $\mu$m et des pixels de dimension D = 40 $\mu$m (ou d = 0,5 $\mu$m et D = 20$\mu$m), environ 5 % seulement de la surface est absorbante ($\tau \approx$ 95 %). On pourra se limiter à descendre jusqu'à environ $\tau$ = 90 %.

Le maillage de type hexagonal, ou en nid d'abeilles, selon la figure 5 est un agencement préféré car il optimise la tenue mécanique du réseau de cellules pour un rapport d'aspect donné. Néanmoins, dans le cadre de l'invention toutes les possibilités de maillage respectant une géométrie cristalline sont envisageables. Ainsi un maillage de géométrie rectangulaire, triangulaire, ou octogonale est réalisable. Dans le cadre de l'invention, il est également possible d'avoir une combinaison de différentes formes géométriques de maillages pour former le réseau de cellules, tout en respectant les dimensions des cellules telles que définies précédemment.

La couche 17 incorporant le réseau de cellules 15 peut être recouverte par un certain nombre de couches additionnelles 19, 20 (figure 3), comme il est usuel en optique ophtalmique. Ces couches ont par exemple des fonctions de résistance aux chocs, de résistance à la rayure, de coloration, d'anti-reflet, d'anti-salissure, etc. Dans l'exemple représenté, la couche 17 incorporant le réseau de cellules est placée immédiatement au-dessus du substrat transparent 16, mais on comprendra qu'une ou plusieurs couches intermédiaires peuvent se trouver entre eux, tels que des couches présentant des fonctions de résistance aux chocs, de résistance à la rayure, de coloration.

D'autre part, il est possible que plusieurs réseaux de cellules soient présents dans l'empilement de couches formé sur le substrat. Il est ainsi possible, par exemple, que l'empilement des couches comporte notamment une couche de réseaux de cellules contenant une substance permettant de conférer à l'élément des fonctions photochromiques, une autre couche permettant de conférer à l'élément des fonctions de variations d'indice de réfraction. Ces couches de réseaux de cellules peuvent également être alternées avec des couches additionnelles telles que décrites précédemment.

Les diverses combinaisons sont possibles grâce notamment à la grande souplesse du procédé de réalisation de l'élément optique transparent. Ainsi dans le cadre de l'invention le composant optique peut comprendre un réseau de cellules dans lequel chaque cellule est remplie avec une substance présentant une ou plusieurs propriétés optiques, ou bien dans lequel l'ensemble de cellules 15 inclut plusieurs groupes de cellules contenant des substances différentes. Le composant optique peut aussi être constitué d'un empilement comportant au moins deux couches d'ensemble de cellules, chaque ensemble de cellules présentant des propriétés optiques identiques, ou chaque ensemble de cellules présentant des propriétés optiques différentes, ou les cellules au sein de chaque ensemble de cellules présentant des propriétés optiques différentes.

Le substrat transparent 16 peut être en verre ou en différents matériaux polymères couramment utilisés en optique ophtalmique. Parmi les matériaux polymères utilisables, on peut citer à titre indicatif et non limitatif, les matériaux polycarbonates, polyamides, polyimides, polysulfones, copolymères de polyéthylènetérephtalate et polycarbonate, polyoléfines, notamment polynorbornènes, polymères et copolymères de diéthylène glycol bis(allylcarbonate), polymères et copolymères (méth)acryliques, notamment polymères et copolymères (méth)acryliques dérivés de bisphénol-A, polymères et copolymères thio(méth)acryliques, polymères et copolymères uréthane et thiouréthane, polymères et copolymères époxy, et polymères et copolymères épisulfide.

La couche 17 incorporant le réseau de cellules est de préférence située sur sa face avant convexe 12, la face arrière concave 13 restant libre pour être éventuellement remise en forme par usinage et polissage si cela est nécessaire. Cependant, dans le cas où l'élément optique transparent est un verre correcteur, la correction d'amétropie peut être réalisée en modulant spatialement l'indice de réfraction des substances contenues dans les cellules 15, ce qui permet de s'affranchir de la retouche de la face arrière, et par conséquent de disposer d'une plus grande souplesse dans la conception et/ou la mise en oeuvre des différentes couches et revêtements dont doit être muni le verre. Le composant optique peut également être situé sur la face concave d'une lentille. Bien évidemment, le composant optique peut aussi être intégré sur un élément optique plan.

Les figures 6 et 7 illustrent une première manière de réaliser le réseau de cellules sur le substrat 16. La technique est ici similaire à celles utilisées pour fabriquer des dispositifs d'affichage électrophorétiques. De telles techniques sont décrites par exemple dans les documents WO 00/77570, WO 02/01281, US 2002/ 0176963, US 6 327 072 ou US 6 597 340. Le réseau de cellules est également réalisable en utilisant des procédés de fabrication, issus de la microélectronique, bien connu par l'homme du métier. On peut citer à titre illustratif et non limitatif, les procédés tels que l'impression à chaud, l'embossage à chaud, la photolithographie (hard, soft, positive, négative), la microdéposition telle que l'impression par micro-contact, la sérigraphie, ou encore l'impression par jet d'encre.

Dans l'exemple considéré, on dépose d'abord sur le substrat 16 un film d'une solution de monomères polymérisable sous l'action d'un rayonnement, par exemple ultraviolet. Ce film est soumis à un rayonnement ultraviolet à travers un masque qui occulte des carrés ou hexagones répartis en réseau et correspondant aux positions des microcuves 15. La polymérisation sélective laisse en place les parois 18 dressées au-dessus d'une couche de support 21. La solution de monomères est alors évacuée et le composant est dans l'état représenté sur la figure 6.

Pour obtenir une structure analogue, une autre possibilité est de recourir à une technique de photolithographie. On commence par déposer sur le substrat 16 une couche de matériau, par exemple polymère, sur une épaisseur de l'ordre de la hauteur visée pour les parois 18, par exemple 5 μm ou 20 μm. On dépose ensuite sur cette couche un film de photorésist qu'on expose à travers un masque selon un motif en grille. Les zones non exposées sont éliminées au développement du photorésist pour laisser un masque aligné sur les positions des parois, à travers lequel la couche de matériau est soumise à une gravure anisotrope. Cette gravure, qui forme les microcuves 15, est poursuivie jusqu'à la profondeur désirée, après quoi le masque est éliminé par attaque chimique.

A partir de l'état représenté sur la figure 6, les microcuves 15 sont remplies avec la substance à propriété optique, à l'état de liquide ou de gel. Un traitement préalable de la face avant du composant peut éventuellement être appliqué pour faciliter le mouillage en surface du matériau des parois et du fond des microcuves. La solution ou suspension formant la substance à propriété optique peut être la même pour toutes les microcuves du réseau, auquel cas elle peut être introduite simplement par immersion du composant dans un bain approprié, par un procédé de type sérigraphique, par un procédé de revêtement par centrifugation (spin process), par un procédé d'étalement de la substance à l'aide d'un rouleau ou d'une raclette, ou encore par un procédé de spray. Il est également possible de l'injecter localement dans les microcuves individuelles à l'aide d'une tête de projection d'encre.

Cette dernière méthode sera typiquement retenue lorsque la substance à propriété optique est différenciée d'une microcuve à une autre, plusieurs têtes de projection étant déplacées le long de la surface pour remplir successivement les microcuves.

Cependant, dans le cas notamment où les microcuves sont formées par gravure sélective, une autre possibilité est de creuser d'abord un groupe de microcuves, de les remplir collectivement avec une première substance puis de les obturer, le reste de la surface du composant restant masqué pendant ces opérations. On réitère ensuite la gravure sélective à travers un masque de résist recouvrant au moins les zones de microcuves déjà remplies en plus des zones de paroi, et on procède à un remplissage des nouvelles microcuves avec une substance différente puis à leur obturation. Ce processus peut être répété une ou plusieurs fois si on souhaite distribuer des substances différenciées le long de la surface du composant.

Pour fermer hermétiquement un ensemble de microcuves remplies, on applique par exemple un film plastique collé, soudé thermiquement ou laminé à chaud sur le haut des parois 18. On peut aussi déposer sur la zone à obturer un matériau polymérisable en solution, non miscible avec la substance à propriété optique contenue dans les microcuves, puis faire polymériser ce matériau, par exemple à chaud ou sous irradiation.

Une fois que le réseau de microcuves 15 a été complété (figure 7), le composant peut recevoir les couches ou revêtements supplémentaires 19, 20 pour terminer sa fabrication. Des composants de ce type sont fabriqués en série puis stockés pour être plus tard repris et découpés individuellement conformément aux besoins d'un client.

Si la substance à propriété optique n'est pas destinée à rester à l'état de liquide ou de gel, on peut lui appliquer un traitement de solidification, par exemple une séquence de chauffage et/ou d'irradiation, à un stade approprié à partir du moment où la substance a été déposée.

Dans une variante représentée sur la figure 8, le composant optique constitué d'un réseau de microcuves 25 est construit sous la forme d'un film transparent souple 27. Un tel film 27 est réalisable par des techniques analogues à celles décrites précédemment. Dans ce cas le film 27 est réalisable sur un support plan et non convexe ou concave.

Le film 27 est par exemple fabriqué industriellement sur une étendue relativement grande, pour faire des économies sur l'exécution groupée des étapes du procédé, puis découpé aux dimensions appropriées pour être reporté sur le substrat 16 d'une ébauche. Ce report peut être effectué par collage du film souple, par thermoformage du film, voire par un phénomène physique d'adhérence sous vide. Le film 27 peut ensuite recevoir divers revêtements, comme dans le cas précédent, ou bien être reporté sur le substrat 16 lui-même revêtu d'une ou plusieurs couches additionnelles telles que décrites précédemment.

Dans un domaine d'application de l'invention, la propriété optique de la substance introduite dans les microcuves 15 se rapporte à son indice de réfraction. On module l'indice de réfraction de la substance le long de la surface du composant pour obtenir une lentille correctrice. Dans une première variante de l'invention, la modulation peut être réalisée en introduisant des substances d'indices différents lors de la fabrication du réseau de microcuves 15.

Dans une autre variante de l'invention, la modulation peut être réalisée en introduisant dans les microcuves 15 une substance dont l'indice de réfraction peut être réglé ultérieurement sous irradiation. L'inscription de la fonction optique correctrice est alors effectuée en exposant l'ébauche 10 ou le verre 11 à de la lumière dont l'énergie varie le long de la surface pour obtenir le profil d'indice souhaité afin de corriger la vision d'un patient. Cette lumière est typiquement celle produite par un laser, l'équipement d'écriture étant semblable à celui utilisé pour graver des CDROM ou autres supports optiques de mémoire. L'exposition plus ou moins grande de la substance photosensible peut résulter d'une modulation de la puissance du laser et/ou du choix du temps d'exposition.

Parmi les substances utilisables dans cette application, on peut citer, par exemple, les matériaux mésoporeux ou les cristaux liquides. Ces cristaux liquides peuvent être figés par une réaction de polymérisation, par exemple induite par irradiation. On peut ainsi les figer dans un état choisi pour introduire un retard optique déterminé dans les ondes lumineuses qui les traversent. Dans le cas d'un matériau mésoporeux le contrôle de l'indice de réfraction du matériau se fait au travers de la variation de sa porosité. Une autre possibilité est d'utiliser des photopolymères dont une propriété bien connue est de changer d'indice de réfraction au cours de la réaction de polymérisation induite par irradiation. Ces changements d'indice sont dus à une modification de la densité du matériau et à un changement de la structure chimique. On utilisera de préférence des photopolymères qui ne subissent qu'une très faible variation de volume lors de la réaction de polymérisation.

La polymérisation sélective de la solution ou suspension est réalisée en présence d'un rayonnement différencié spatialement par rapport à la surface du composant, afin d'obtenir la modulation d'indice souhaitée. Cette modulation est déterminée préalablement en fonction de l'amétropie estimée de l'oeil d'un patient à corriger.

Dans une autre application de l'invention, la substance introduite sous forme de liquide ou de gel dans les microcuves a une propriété photochromique. Parmi les substances utilisés dans cette application on peut citer à titre d'exemples les composés photochromique contenant un motif central tel qu'un noyau spirooxazine, spiro-indoline[2,3']benzoxazine, chromène, spiroxazine homoazaadamantane, spirofluorène-(2H)-benzopyrane, naphto[2,1-b]pyrane tels que décrit notamment dans les demandes de brevet et brevets FR 2763070, EP 0676401, EP 0489655, EP 0653428, EP 0407237, FR 2718447, US 6,281,366 ou EP 1204714.

Dans le cadre de l'invention, la substance à propriété optique peut encore être un colorant, ou un pigment apte à apporter une modification du taux de transmission.

## Revendications

1.  Procédé de réalisation d'un élément optique transparent (11), comprenant les étapes suivantes :

    - produire un composant optique (10) ayant au moins un ensemble transparent de cellules (15 ; 25) juxtaposées parallèlement à une surface du composant, chaque cellule étant hermétiquement fermée et contenant une substance à propriété optique ; et
    - découper le composant optique le long d'un contour défini sur ladite surface, correspondant à une forme déterminée pour l'élément optique,

    **caractérisé en ce que** l'ensemble de cellules (15 ; 25) inclut plusieurs groupes de cellules contenant des substances différentes.

**2.** Procédé selon la revendication 1, dans lequel l'ensemble de cellules constitue une couche ayant, perpendiculairement à ladite surface, une hauteur inférieure à 100 $\mu$m.

**3.** Procédé selon la revendication 2, dans lequel la couche constituée par l'ensemble des cellules a une hauteur comprise entre 10 $\mu$m et 50 $\mu$m.

**4.** Procédé selon la revendication 2, dans lequel la couche constituée par l'ensemble de cellules a une hauteur comprise entre 1 $\mu$m et 10 $\mu$m.

**5.** Procédé selon la revendication 4, dans lequel la couche constituée par l'ensemble de cellules a une hauteur d'environ 5 $\mu$m.

**6.** Procédé selon l'une quelconque des revendications précédentes, comprenant en outre une étape de perçage à travers le composant optique (10), pour la fixation de l'élément optique (11) sur un support de maintien.

**7.** Procédé selon l'une quelconque des revendications précédentes, dans lequel la production du composant optique (10) comprend la formation de l'ensemble de cellules (15) sur un support transparent rigide (16).

**8.** Procédé selon l'une quelconque des revendications précédentes, dans lequel la production du composant optique (10) comprend la formation de l'ensemble de cellules (25) au sein d'un film transparent souple (27) puis le report dudit film sur un support transparent rigide (16).

**9.** Procédé selon la revendication 7 ou 8, dans lequel le support transparent rigide (16) est convexe, concave ou plan sur le côté recevant l'ensemble de cellules (15 ; 25).

**10.** Procédé selon l'une quelconque des revendications précédentes, dans lequel la substance à propriété optique contenue dans certaines au moins des cellules (15 ; 25) est sous forme de liquide ou de gel.

**11.** Procédé selon la revendication 10, dans lequel la production du composant optique (10) comprend la formation sur un substrat d'un réseau de parois (18) pour délimiter les cellules (15) parallèlement à ladite surface du composant, un remplissage collectif ou individuel des cellules avec la substance à propriété optique sous forme de liquide ou de gel, et la fermeture des cellules sur leur côté opposé au substrat.

**12.** Procédé selon l'une quelconque des revendications précédentes, dans lequel la propriété optique est choisie parmi une propriété de coloration, de photochromisme, de polarisation, et d'indice de réfraction.

**13.** Procédé selon l'une quelconque des revendications précédentes, dans lequel des cellules différentes (15 ; 25) contiennent des substances d'indice de réfraction différent.

**14.** Procédé selon la revendication 13, dans lequel les substances d'indice de réfraction différent comprennent des photopolymères, des cristaux liquides, ou des matériaux mésoporeux.

**15.** Procédé selon la revendication 14, dans lequel la production du composant optique (10) comprend la formation sur un substrat (16) d'un réseau de parois (18) pour délimiter les cellules (15) parallèlement à ladite surface du composant, un remplissage collectif des cellules avec une solution ou une suspension de monomères ou de cristaux liquides, la fermeture des cellules sur leur côté opposé au substrat, et la polymérisation sélective de ladite solution ou suspension en présence d'un rayonnement électromagnétique différencié parallèlement à ladite surface du composant.

**16.** Procédé selon l'une quelconque des revendications 13 à 15, dans lequel on adapte l'indice de réfraction des substances contenues dans les cellules pour faire varier ledit indice le long de la surface du composant en fonction de l'amétropie estimée d'un oeil à corriger.

**17.** Procédé selon l'une quelconque des revendications précédentes, dans lequel la production du composant optique (10) comprend la formation sur un substrat (16) d'un réseau de parois (18) pour délimiter les cellules (18) parallèlement à ladite surface du composant, un remplissage différencié des cellules avec les substances à propriété optique, à l'aide de têtes de projection d'encres, et la fermeture des cellules sur leur côté opposé au substrat.

**18.** Procédé selon l'une quelconque des revendications précédentes, dans lequel plusieurs ensembles de cellules sont empilés sur l'épaisseur du composant.

**19.** Procédé selon la revendication 18, dans lequel chaque ensemble de cellules présente des propriétés optiques identiques, ou chaque ensemble de cellules présente des propriétés optiques différentes, ou les cellules au sein de chaque ensemble de cellules présentent des propriétés optiques différentes.

**20.** Procédé selon l'une quelconque des revendications précédentes, dans lequel le facteur de remplissage $\tau$ est supérieur à 90 %, parallèlement à la surface du composant.

**21.** Procédé selon la revendication 20, dans lequel le facteur de remplissage est compris entre 90 % et 99,5 % inclus.

**22.** Procédé selon la revendication 21, dans lequel le facteur de remplissage est compris entre 96 % et 98,5 %.

**23.** Procédé selon l'une quelconque des revendications précédentes, dans lequel les cellules (15 ; 25) de l'ensemble sont agencées selon un maillage de type hexagonal.

**24.** Procédé selon l'une quelconque des revendications précédentes, dans lequel les cellules (15 ; 25) ont des dimensions supérieures à 1 $\mu$m parallèlement à la surface du composant.

**25.** Procédé selon la revendication 24, dans lequel les cellules (15 ; 25) ont une dimension comprise entre 5 $\mu$m et 100 $\mu$m, parallèlement à la surface du composant.

**26.** Procédé selon la revendication 25, dans lequel les cellules (15 ; 25) ont une dimension comprise entre 10 $\mu$m et 40 $\mu$m, parallèlement à la surface du composant.

**27.** Procédé selon l'une quelconque des revendications précédentes, dans lequel les cellules (15 ; 25) sont séparées par des parois (18) de dimensions comprises entre 0,10 $\mu$m et 5 $\mu$m, parallèlement à la surface du composant.

**28.** Procédé selon la revendication 27, dans lequel les parois (18) sont de dimensions inférieures à 0,35 $\mu$m.

**29.** Procédé selon la revendication 27, dans lequel les cellules (15 ; 25) sont séparées par des parois (18) en matériau ne réfléchissant pas la lumière et sont de dimensions comprises entre 0,40 $\mu$m et 3,00 $\mu$m.

**30.** Procédé selon la revendication 29, dans lequel les parois sont de dimensions comprises entre 0,40 $\mu$m et 1,00 $\mu$m.

**31.** Composant optique, comprenant au moins un ensemble transparent de cellules (15 ; 25) juxtaposées parallèlement à une surface du composant, chaque cellule étant hermétiquement fermée et contenant une substance à propriété optique, **caractérisé en ce que** l'ensemble de cellules (15 ; 25) inclut plusieurs groupes de cellules contenant des substances différentes.

**32.** Composant optique selon la revendication 31, dans lequel l'ensemble de cellules constitue une couche ayant, perpendiculairement à ladite surface, une hauteur inférieure à 100 $\mu$m.

**33.** Composant optique selon la revendication 32, dans lequel la couche constituée par l'ensemble de cellules a une hauteur comprise entre 10 $\mu$m et 50 $\mu$m.

**34.** Composant optique selon la revendication 32, dans lequel la couche constituée par l'ensemble de cellules a une hauteur comprise entre 1 $\mu$m et 10 $\mu$m.

**35.** Composant optique selon la revendication 34, dans lequel la couche constituée par l'ensemble de cellules a une hauteur d'environ 5 $\mu$m.

**36.** Composant optique selon l'une quelconque des revendications 31 à 35, comprenant un support transparent rigide (16) sur lequel est formé l'ensemble de cellules (15).

**37.** Composant optique selon l'une quelconque des revendications 31 à 35, comprenant un support transparent rigide (16) sur lequel est reporté un film transparent (27) incorporant l'ensemble de cellules (25).

**38.** Composant optique selon la revendication 36 ou 37, dans lequel le support transparent rigide (16) est convexe, concave ou plan sur le côté présentant l'ensemble de cellules.

**39.** Composant optique selon l'une quelconque des revendications 31 à 38, dans lequel la substance à propriété optique contenue dans certaines au moins des cellules (15 ; 25) est sous forme de liquide ou de gel.

**40.** Composant optique selon l'une quelconque des revendications 31 à 39, dans lequel la propriété optique est choisie parmi une propriété de coloration, de photochromisme, de polarisation, et d'indice de réfraction.

**41.** Composant optique selon l'une quelconque des revendications 31 à 40, dans lequel des cellules différentes (15; 25) contiennent des substances d'indice de réfraction différent.

**42.** Composant optique selon la revendication 41, dans lequel les substances d'indice de réfraction différent sont des photopolymères, des cristaux liquides, ou des matériaux mésoporeux.

**43.** Composant optique selon l'une quelconque des revendications 31 à 42, dans lequel plusieurs ensembles de cellules sont empilés sur l'épaisseur dudit composant.

**44.** Composant optique selon la revendication 43, dans lequel chaque ensemble de cellules présente des propriétés optiques identiques, ou chaque ensemble de cellules présente des propriétés optiques différentes, ou les cellules au sein de chaque ensemble de cellules présentent des propriétés optiques différentes.

**45.** Composant optique selon l'une quelconque des revendications 31 à 44, dans lequel l'ensemble de cellules présente un facteur de remplissage τ supérieur à 90 %, parallèlement à la surface du composant.

**46.** Composant optique selon la revendication 45, dans lequel le facteur de remplissage est compris entre 90 % et 99,5 % inclus.

**47.** Composant optique selon l'une quelconque des revendications 31 à 46, dans lequel les cellules (15; 25) de l'ensemble sont agencées selon un maillage de type hexagonal.

**48.** Composant optique selon l'une quelconque des revendications 31 à 47, dans lequel les cellules (15 ; 25) ont des dimensions supérieures à 1 μm, parallèlement à la surface du composant.

**49.** Composant optique selon la revendication 48, dans lequel les cellules (15, 25) ont une dimension comprise entre 5 μm et 100 μm, parallèlement à la surface du composant.

**50.** Composant optique la revendication 49, dans lequel les cellules (15 ; 25) ont une dimension comprise entre 10 μm et 40 μm, parallèlement à la surface du composant.

**51.** Composant optique selon l'une quelconque des revendications 31 à 50, dans lequel les cellules (15 ; 25) sont séparées par des parois (18) de dimensions comprises entre 0,10 μm et 5 μm, parallèlement à la surface du composant.

**52.** Composant optique selon la revendication 51, dans lequel les cellules (15 ; 25) sont séparées par des parois (18) de dimensions comprises entre 0,10 μm et 0,40 μm, parallèlement à la surface du composant.

**53.** Composant optique selon la revendication 52, dans lequel les parois (18) sont de dimensions inférieures à 0,35 μm.

**54.** Composant optique selon la revendication 51, dans lequel les cellules (15 ; 25) sont séparées par des parois (18) en matériau ne réfléchissant pas la lumière et sont de dimensions comprises entre 0,40 μm et 3,00 μm.

**55.** Composant optique selon la revendication 54, dans lequel les parois sont de dimensions comprises entre 0,40 μm et 1,00 μm.

**56.** Composant optique selon l'une quelconque des revendications 31 à 55, utile pour la fabrication d'un élément optique transparent choisi parmi les lentilles ophtalmiques, les lentilles pour instrument d'optique, les filtres, les lentilles de visée optique, les visières oculaires, et les optiques destinées à des dispositifs d'éclairage.

**57.** Utilisation d'un composant optique selon l'une quelconque des revendications 31 à 56 dans la fabrication d'un élément optique transparent choisi parmi les lentilles ophtalmiques, les lentilles de contact, les implants oculaires, les lentilles pour instruments d'optique, les filtres, les lentilles de visée optique, les visières oculaires, et les optiques de dispositifs d'éclairage.

**58.** Verre de lunettes, réalisé en découpant un composant optique (10) selon l'une quelconque des revendications 31 à 55.

**59.** Verre de lunettes selon la revendication 58, dans lequel au moins un perçage est réalisé à travers le composant (10) pour la fixation du verre (11) sur une monture.

**60.** Verre de lunettes selon la revendication 58 ou 59, dans lequel la propriété optique de la substance contenue dans les cellules (15 ; 25) varie le long de la surface du verre en fonction de l'amétropie estimée d'un oeil à corriger.

**61.** Verre de lunettes selon la revendication 58 ou 59, dans lequel la substance contenue dans les cellules (15 ; 25) est une substance photochromique.

**Claims**

**1.** Process for producing a transparent optical element (11), comprising the following steps:

- producing an optical component (10) having at least one transparent set of cells (15; 25) that are juxtaposed parallel to a surface of the component, each cell being hermetically sealed and containing a substance having an optical property; and
- cutting the optical component along a contour defined on said surface, corresponding to a predetermined shape for the optical element,

**characterized in that** the set of cells (15; 25) includes several groups of cells containing different substances.

2. Process according to Claim 1, wherein the set of cells forms a layer having, perpendicular to said surface, a height of less than 100 $\mu$m.

3. Process according to Claim 2, wherein the layer formed by the set of cells has a height of between 10 $\mu$m and 50 $\mu$m.

4. Process according to Claim 2, wherein the layer formed by the set of cells has a height of between 1 $\mu$m and 10 $\mu$m.

5. Process according to Claim 4, wherein the layer formed by the set of cells has a height of about 5 $\mu$m.

6. Process according to any one of the preceding claims, which furthermore comprises a step of drilling through the optical component (10) in order to fasten the optical element (11) to a holding support.

7. Process according to any one of the preceding claims, wherein the production of the optical component (10) comprises the formation of the set of cells (15) on a rigid transparent substrate (16).

8. Process according to any one of the preceding claims, wherein the production of the optical component (10) comprises the formation of the set of cells (25) within a flexible transparent film (27) followed by the transfer of said film onto a rigid transparent substrate (16).

9. Process according to Claim 7 or 8, wherein the rigid transparent substrate (16) is convex, concave or planar on that side which receives the set of cells (15; 25).

10. Process according to any one of the preceding claims, wherein the substance having an optical property contained in at least some of the cells (15; 25) is in the form of a liquid or gel.

11. Process according to Claim 10, wherein the production of the optical component (10) comprises the formation, on a substrate, of a network of walls (18) for defining the cells (15) parallel to said surface of the component, the collective or individual filling of the cells with the substance having an optical property in the form of a liquid or gel, and the closing of the cells on their side opposite from the substrate.

12. Process according to any one of the preceding claims, wherein the optical property is selected from a coloration, photochromism, polarization or refractive-index property.

13. Process according to any one of the preceding claims, wherein different cells (15; 25) contain substances having a different refractive index.

14. Process according to Claim 13, wherein the substances having a different refractive index comprise photopolymers, liquid crystals or mesoporous materials.

15. Process according to Claim 14, wherein the production of the optical component (10) comprises the formation, on a substrate (16), of a network of walls (18) for defining the cells (15) parallel to said surface of the component, the collective filling of the cells with a solution or a suspension of monomers or liquid crystals, the closing of the cells on their side opposite from the substrate, and the selective curing of said solution or suspension in the presence of an electromagnetic radiation differentiated parallel to said surface of the component.

16. Process according to any one of claims 13 to 15, wherein the refractive index of the substances contained in the cells are adapted in order to vary said index over the surface of the component according to the estimated ametropia of an eye to be corrected.

17. Process according to any one of the preceding claims, wherein the production of the optical component (10) comprises the formation, on a substrate (16), of a network of walls (18) for defining the cells (15) parallel to said surface of the component, a differentiated filling of the cells with the substances having an optical property, using ink-jet heads, and the closing of the cells on their side opposite from the substrate.

18. Process according to any one of the preceding claims, wherein several sets of cells are stacked on the thickness of the component.

19. Process according to Claim 18, wherein each set of cells has identical optical properties, or each set of cells has different optical properties, or the cells within each set of cells have different optical properties.

20. Process according to any one of the preceding claims, wherein the fill factor $\tau$ is greater than 90%, parallel to the surface of the component.

21. Process according to Claim 20, wherein the fill factor is between 90% and 99.5% inclusive.

22. Process according to Claim 21, wherein the fill factor is between 96% and 98.5%.

23. Process according to any one of the preceding claims, wherein the cells (15; 25) of the set are arranged in a hexagonal-type lattice.

24. Process according to any one of the preceding claims, wherein the cells (15; 25) have dimensions of greater than 1 μm parallel to the surface of the component.

25. Process according to Claim 24, wherein the cells (15; 25) have a dimension of between 5 μm and 100 μm parallel to the surface of the component.

26. Process according to Claim 25, wherein the cells (15; 25) have a dimension of between 10 μm and 40 μm parallel to the surface of the component.

27. Process according to any one of the preceding claims, wherein the cells (15; 25) are separated by walls (18) having dimensions of between 0.10 μm and 5 μm parallel to the surface of the component.

28. Process according to Claim 27, wherein the walls (18) have dimensions of less than 0.35 μm.

29. Process according to Claim 27, wherein the cells (15; 25) are separated by walls (18) made of a material that does not reflect light and have dimensions of between 0.40 μm and 3.00 μm.

30. Process according to Claim 29, wherein the walls have dimensions of between 0.40 μm and 1.00 μm.

31. Optical component, comprising at least one transparent set of cells (15; 25) that are juxtaposed parallel to one surface of the component, each cell being hermetically sealed and containing a substance having an optical property;
**characterized in that** the set of cells (15; 25) includes several groups of cells containing different substances.

32. Optical component according to Claim 31, wherein the set of cells forms a layer having, perpendicular to said surface, a height of less than 100 μm.

33. Optical component according to Claim 32, wherein the layer formed by the set of cells has a height of between 10 μm and 50 μm.

34. Optical component according to Claim 32, wherein the layer formed by the set of cells has a height of between 1 μm and 10 μm.

35. Optical component according to Claim 34, wherein the layer formed by the set of cells has a height of about 5 μm.

36. Optical component according to any one of claims 31 to 35, which comprises a rigid transparent substrate (16) on which the set of cells (15) is formed.

37. Optical component according to any one of claims 31 to 35, which comprises a rigid transparent substrate (16) onto which a transparent film (27) incorporating the set of cells (25) is transferred.

38. Optical component according to Claim 36 or 37, wherein the rigid transparent substrate (16) is convex, concave or planar on that side which has the set of cells.

39. Optical component according to any one of claims 31 to 38, wherein the substance having an optical property contained in at least some of the cells (15; 25) is in the form of a liquid or gel.

40. Optical component according to any one of claims 31 to 39, wherein the optical property is selected from a coloration, photochromism, polarization or refractive-index property.

41. Optical component according to any one of claims 31 to 40, wherein different cells (15; 25) contain substances having a different refractive index.

42. Optical component according to Claim 41, wherein the substances having a different refractive index are photopolymers, liquid crystals or mesoporous materials.

43. Optical component according to any one of claims 31 to 42, wherein several sets of cells are stacked on the thickness of said component.

44. Optical component according to Claim 43, wherein each set of cells has identical optical properties, or each set of cells has different optical properties, or the cells within each set of cells have different optical properties.

45. Optical component according to any one of claims 31 to 44, wherein the set of cells has a fill factor τ of greater than 90%, parallel to the surface of the component.

46. Optical component according to Claim 45, wherein the fill factor is between 90% and 99.5% inclusive.

47. Optical component according to any one of claims 31 to 46, wherein the cells (15; 25) of the set are arranged in a hexagonal-type lattice.

48. Optical component according to any one of claims 31 to 47, wherein the cells (15; 25) have dimensions of greater than 1 μm parallel to the surface of the component.

**49.** Optical component according to Claim 48, wherein the cells (15; 25) have a dimension of between 5 $\mu$m and 100 $\mu$m parallel to the surface of the component.

**50.** Optical component according to Claim 49, wherein the cells (15; 25) have a dimension of between 10 $\mu$m and 40 $\mu$m parallel to the surface of the component.

**51.** Optical component according to any one of claims 31 to 50, wherein the cells (15; 25) are separated by walls (18) having dimensions of between 0.10 $\mu$m and 5 $\mu$m parallel to the surface of the component.

**52.** Optical component according to Claim 51, wherein the cells (15; 25) are separated by walls (18) having dimensions of between 0.10 $\mu$m and 0.40 $\mu$m parallel to the surface of the component.

**53.** Optical component according to Claim 52, wherein the walls (18) have dimensions of less than 0.35 $\mu$m.

**54.** Optical component according to Claim 51, wherein the cells (15; 25) are separated by walls (18) made of a material that does not reflect light and have dimensions of between 0.40 $\mu$m and 3.00 $\mu$m.

**55.** Optical component according to Claim 54, wherein the walls have dimensions of between 0.40 $\mu$m and 1.00 $\mu$m.

**56.** Optical component according to any one of claims 31 to 55, useful for the manufacturing of a transparent optical element selected from ophthalmic lenses, lenses for optical instruments, filters, optical sight lenses, eye visors, and optics that are intended for illumination devices.

**57.** Use of an optical component according to any one of claims 31 to 56, in the manufacturing of a transparent optical element selected from ophthalmic lenses, contact lenses, ocular implants, lenses for optical instruments, filters, optical sight lenses, eye visors, and optics for illumination devices.

**58.** Spectacle lens, produced by cutting an optical component (10) according to any one of claims 31 to 55.

**59.** Spectacle lens according to Claim 58, wherein at least one hole is drilled through the component (10) in order to fasten the lens (11) to a spectacle frame.

**60.** Spectacle lens according to Claim 58 or 59, wherein the optical property of the substance contained in the cells (15; 25) varies over the surface of the lens as a function of the estimated ametropia of an eye to be corrected.

**61.** Spectacle lens according to Claim 58 or 59, wherein the substance contained in the cells (15; 25) is a photochromic substance.

**Patentansprüche**

**1.** Verfahren zur Herstellung eines transparenten optischen Elements (11), wobei das Verfahren die folgenden Schritte umfasst:

- Erzeugen eines optischen Bauteils (10), welches wenigstens eine transparente Anordnung von Zellen (15; 25) aufweist, welche parallel zu einer Fläche des Bauteils nebeneinander angeordnet sind, wobei jede Zelle hermetisch abgeschlossen ist und eine Substanz mit einer optischen Eigenschaft enthält; und
- Abtrennen des optischen Bauteils entlang einer definierten Kontour auf der Fläche, wobei die Kontour einer für das optische Element bestimmten Form entspricht,

**dadurch gekennzeichnet, dass** die Anordnung von Zellen (15; 25) eine Mehrzahl von Gruppen von Zellen einschliesst, welche unterschiedliche Substanzen enthalten.

**2.** Verfahren nach Anspruch 1, wobei die Anordnung von Zellen eine Schicht bildet, welche senkrecht zu der Fläche eine Dicke von weniger als 100 Mikrometer aufweist.

**3.** Verfahren nach Anspruch 2, wobei die durch die Anordnung von Zellen gebildete Schicht eine Dicke von zwischen 10 Mikrometer und 50 Mikrometer aufweist.

**4.** Verfahren nach Anspruch 2, wobei die durch die Anordnung von Zellen gebildete Schicht eine Dicke von zwischen 1 Mikrometer und 10 Mikrometer aufweist.

**5.** Verfahren nach Anspruch 4, wobei die durch die Anordnung von Zellen gebildete Schicht eine Dicke von etwa 5 Mikrometer aufweist.

**6.** Verfahren nach einem der vorhergehenden Ansprüche, ferner umfassend einen Schritt eines Bohrens durch das optische Bauteil (10) zur Befestigung des optischen Elements (11) an einem Halteträger.

**7.** Verfahren nach einem der vorhergehenden Ansprüche, wobei das Erzeugen des optischen Bauteils (10) das Bilden der Anordnung von Zellen (15) auf einem transparenten starren Träger (16) umfasst.

**8.** Verfahren nach einem der vorhergehenden Ansprüche, wobei das Erzeugen des optischen Bauteils (10) das Bilden der Anordnung von Zellen (25) in einem transparenten flexiblen Film (27) und dann ein Übertragen des Films auf einen transparenten starren Träger (16) umfasst.

9. Verfahren nach Anspruch 7 oder 8, wobei der transparente starre Träger (16) konvex, konkax oder eben an der die Anordnung von Zellen (15; 25) aufnehmenden Seite ist.

10. Verfahren nach einem der vorhergehenden Ansprüche, wobei die Substanz mit einer optischen Eigenschaft, welche in wenigstens einigen der Zellen (15; 25) enthalten ist, in flüssiger oder gelförmiger Form vorliegt.

11. Verfahren nach Anspruch 10, wobei das Erzeugen des optischen Bauteils (10) das Bilden eines Netzes von Wänden (18) auf einem Substrat zum Begrenzen der Zellen (15) parallel zu der Fläche des Bauteils, ein kollektives oder einzelnes Befüllen der Zellen mit der Substanz mit einer optischen Eigenschaft in flüssiger oder gelförmiger Form und ein Schließen der Zellen an ihrer dem Substat abgewandten Seite umfasst.

12. Verfahren nach einem der vorhergehenden Ansprüche, wobei die optische Eigenschaft aus einer Farbgebungseigenschaft, einer Photochromieeigenschaft, einer Polarisationseigenschaft und einer Brechungsindexeigenschaft ausgewählt ist.

13. Verfahren nach einem der vorhergehenden Ansprüche, wobei die verschiedenen Zellen (15; 25) Substanzen mit verschiedenen Brechungsindizes enthalten.

14. Verfahren nach Anspruch 13, wobei die Substanzen mit verschiedenem Brechungsindex Photopolymere, Flüssigkristalle oder Materialien mittlerer Porosität umfassen.

15. Verfahren nach Anspruch 14, wobei das Erzeugen des optischen Bauteils (10) das Bilden eines Netzes von Wänden (18) auf einem Substrat (16) zum Begrenzen der Zellen (15) parallel zu der Fläche des Bauteils, ein kollektives oder einzelnes Befüllen der Zellen mit einer Lösung oder einer Suspension aus Monomeren oder Flüssigkristallen, ein Schließen der Zellen an ihrer dem Substat abgewandten Seite und eine selektive Polymerisation der Lösung oder der Suspension bei Anwesenheit einer parallel zu der Fläche des Bauteils differenzierten elektromagnetischen Bestrahlung umfasst.

16. Verfahren nach einem der Ansprüche 13 bis 15, wobei der Brechungsindex der in den Zellen enthaltenen Substanzen derart angepasst wird, dass der Index entlang der Fläche des Bauteils in Abhängigkeit von der geschätzten zu korrigierenden Fehlsichtigkeit eines Augens variiert.

17. Verfahren nach einem der vorhergehenden Ansprüche, wobei das Erzeugen des optischen Bauteils (10) das Bilden eines Netzes von Wänden (18) auf einem Substrat (16) zum Begrenzen der Zellen (18) parallel zu der Fläche des Bauteils, ein differenziertes Befüllen der Zellen mit den Substanzen mit einer optischen Eigenschaft mit Hilfe von Tintenprojektionsköpfen und ein Schließen der Zellen an ihrer von dem Substrat abgewandten Seite umfasst.

18. Verfahren nach einem der vorhergehenden Ansprüche, wobei eine Mehrzahl von Anordnungen von Zellen über die Dicke des Bauteils gestapelt sind.

19. Verfahren nach Anspruch 18, wobei jede Anordnung von Zellen identische optische Eigenschaften aufweist oder wobei jede Anordnung von Zellen unterschiedliche optische Eigenschaften aufweist oder wobei die Zellen innerhalb jeder Anordnung von Zellen unterschiedliche optische Eigenschaften aufweisen.

20. Verfahren nach einem der vorhergehenden Ansprüche, wobei der Füllfaktor T größer als 90% parallel zu der Fläche des Bauteils ist.

21. Verfahren nach Anspruch 20, wobei der Füllfaktor größer oder gleich 90% und kleiner oder gleich 99,5% ist.

22. Verfahren nach Anspruch 21, wobei der Füllfaktor zwischen 96% und 98,5% liegt.

23. Verfahren nach einem der vorhergehenden Ansprüche, wobei die Zellen (15; 25) der Anordnung gemäß einem Netz von hexagonaler Art angeordnet sind.

24. Verfahren nach einem der vorhergehenden Ansprüche, wobei die Zellen (15; 25) parallel zu der Fläche des Bauteils Abmaße größer als 1 Mikrometer aufweisen.

25. Verfahren nach Anspruch 24, wobei die Zellen (15; 25) parallel zu der Fläche des Bauteils Abmaße von zwischen 5 Mikrometer und 100 Mikrometer aufweisen.

26. Verfahren nach Anspruch 25, wobei die Zellen (15; 25) parallel zu der Fläche des Bauteils Abmaße von zwischen 10 Mikrometer und 40 Mikrometer aufweisen.

27. Verfahren nach einem der vorhergehenden Ansprüche, wobei die Zellen (15; 25) parallel zu der Fläche des Bauteils durch Wände (18) mit Abmaßen, welche zwischen 0,10 Mikrometer und 5 Mikrometer liegen, getrennt sind.

**28.** Verfahren nach Anspruch 27, wobei die Wände (18) Abmaße von kleiner als 0,35 Mikrometer aufweisen.

**29.** Verfahren nach Anspruch 27, wobei die Zellen (15; 25) durch Wände (18) aus einem Material getrennt sind, welches Licht nicht reflektiert, und Abmaße von zwischen 0,40 Mikrometer und 3,00 Mikrometer aufweisen.

**30.** Verfahren nach Anspruch 29, wobei die Wände Abmaße von zwischen 0,40 Mikrometer und 1,00 Mikrometer aufweisen.

**31.** Optisches Bauteil, umfassend wenigstens eine transparente Anordnung von Zellen (15; 25), welche parallel zu einer Fläche des Bauteils nebeneinander angeordnet sind, wobei jede Zelle hermetisch abgeschlossen ist und eine Substanz mit einer optischen Eigenschaft enthält, **dadurch gekennzeichnet, dass** die Anordnung von Zellen (15; 25) eine Mehrzahl von Gruppen von Zellen einschliesst, welche unterschiedliche Substanzen enthalten.

**32.** Optisches Bauteil nach Anspruch 31, wobei die Anordnung von Zellen eine Schicht bildet, welche senkrecht zu der Fläche eine Dicke von weniger als 100 Mikrometer aufweist.

**33.** Optisches Bauteil nach Anspruch 32, wobei die durch die Anordnung von Zellen gebildete Schicht eine Dicke von zwischen 10 Mikrometer und 50 Mikrometer aufweist.

**34.** Optisches Bauteil nach Anspruch 32, wobei die durch die Anordnung von Zellen gebildete Schicht eine Dicke von zwischen 1 Mikrometer und 10 Mikrometer aufweist.

**35.** Optisches Bauteil nach Anspruch 34, wobei die durch die Anordnung von Zellen gebildete Schicht eine Dicke von etwa 5 Mikrometer aufweist.

**36.** Optisches Bauteil nach einem der Ansprüche 31 bis 35, umfassend einen transparenten starren Träger (16), an dem die Anordnung von Zellen (15) gebildet ist.

**37.** Optisches Bauteil nach einem der Ansprüche 31 bis 35, umfassend einen transparenten starren Träger (16), auf den ein transparenter Film (27) übertragen ist, welcher die Anordnung von Zellen (25) umfasst.

**38.** Optisches Bauteil nach Anspruch 36 oder 37, wobei der transparente starre Träger (16) konvex, konkax oder eben an der die Anordnung von Zellen aufweisenden Seite ist.

**39.** Optisches Bauteil nach einem der Ansprüche 31 bis 38, wobei die Substanz mit einer optischen Eigenschaft, welche in wenigstens einigen der Zellen (15; 25) enthalten ist, in flüssiger oder gelförmiger Form vorliegt.

**40.** Optisches Bauteil nach einem der Ansprüche 31 bis 39, wobei die optische Eigenschaft aus einer Farbgebungseigenschaft, einer Photochromieeigenschaft, einer Polarisationseigenschaft und einer Brechungsindexeigenschaft ausgewählt ist.

**41.** Optisches Bauteil nach einem der Ansprüche 31 bis 40, wobei die verschiedenen Zellen (15; 25) Substanzen mit verschiedenen Brechungsindizes enthalten.

**42.** Optisches Bauteil nach Anspruch 41, wobei die Substanzen mit verschiedenem Brechungsindex Photopolymere, Flüssigkristalle oder Materialien mittlerer Porosität umfassen.

**43.** Optisches Bauteil nach einem der Ansprüche 31 bis 42, wobei eine Mehrzahl von Anordnungen von Zellen über die Dicke des Bauteils gestapelt ist.

**44.** Optisches Bauteil nach Anspruch 43, wobei jede Anordnung von Zellen identische optische Eigenschaften aufweist oder wobei jede Anordnung von Zellen unterschiedliche optische Eigenschaften aufweist oder wobei die Zellen innerhalb jeder Anordnung von Zellen unterschiedliche optische Eigenschaften aufweisen.

**45.** Optisches Bauteil nach einem der Ansprüche 31 bis 44, wobei die Anordnung von Zellen einen Füllfaktor T aufweist, der parallel zu der Fläche des Bauteils größer als 90% ist.

**46.** Optisches Bauteil nach Anspruch 45, wobei der Füllfaktor größer oder gleich 90% und kleiner oder gleich 99,5% ist.

**47.** Optisches Bauteil nach einem der Ansprüche 31 bis 46, wobei die Zellen (15; 25) der Anordnung gemäß einem Netz von hexagonaler Art angeordnet sind.

**48.** Optisches Bauteil nach einem der Ansprüche 31 bis 47, wobei die Zellen (15; 25) parallel zu der Fläche des Bauteils Abmaße größer als 1 Mikrometer aufweisen.

**49.** Optisches Bauteil nach Anspruch 48, wobei die Zellen (15; 25) parallel zu der Fläche des Bauteils Abmaße von zwischen 5 Mikrometer und 100 Mikrometer aufweisen.

50. Optisches Bauteil nach Anspruch 49, wobei die Zellen (15; 25) parallel zu der Fläche des Bauteils Abmaße von zwischen 10 Mikrometer und 40 Mikrometer aufweisen.

51. Optisches Bauteil nach einem der Ansprüche 31 bis 50, wobei die Zellen (15; 25) parallel zu der Fläche des Bauteils durch Wände (18) mit Abmaßen, welche zwischen 0,10 Mikrometer und 5 Mikrometer liegen, getrennt sind.

52. Optisches Bauteil nach Anspruch 51, wobei die Zellen (15; 25) parallel zu der Fläche des Bauteils durch Wände (18) mit Abmaßen, welche zwischen 0,10 Mikrometer und 0,40 Mikrometer liegen, getrennt sind.

53. Optisches Bauteil nach Anspruch 52, wobei die Wände (18) Abmaße von kleiner als 0,35 Mikrometer aufweisen.

54. Optisches Bauteil nach Anspruch 51, wobei die Zellen (15; 25) durch Wände (18) aus einem Material getrennt sind, welches Licht nicht reflektiert, und Abmaße von zwischen 0,40 Mikrometer und 3,00 Mikrometer aufweisen.

55. Optisches Bauteil nach Anspruch 54, wobei die Wände Abmaße von zwischen 0,40 Mikrometer und 1,00 Mikrometer aufweisen.

56. Optisches Bauteil nach einem der Ansprüche 31 bis 55, verwendbar zur Herstellung eines transparenten optischen Elements, welches aus ophthalmischen Linsen, Linsen für ein optisches Instrument, Filtern, optischen Visierlinsen, Okularvisieren und für Beleuchtungsvorrichtungen bestimmten Optiken ausgewählt ist.

57. Verwendung eines optischen Bauteils nach einem der Ansprüche 31 bis 56 bei der Herstellung eines transparenten optischen Elements, welches aus ophthalmischen Linsen, Kontaktlinsen, Okularimplantaten, Linsen für optische Instrumente, Filtern, optischen Visierlinsen, Okularvisieren und für Beleuchtungsvorrichtungen bestimmten Optiken ausgewählt ist.

58. Brillenglas, welches durch Abtrennen eines optischen Bauteils (10) gemäß einem der Ansprüche 31 bis 55 hergestellt ist.

59. Brillenglas nach Anspruch 58, wobei wenigstens eine Bohrung durch das Bauteil (10) zur Befestigung des Glases (11) an einer Fassung gebildet ist.

60. Brillenglas nach Anspruch 58 oder 59, wobei die optische Eigenschaft der in den Zellen (15; 25) enthaltenen Substanz entlang der Fläche des Glases in Abhängigkeit von der geschätzten zu korrigierenden Fehlsichtigkeit eines Augens variiert.

61. Brillenglas nach Anspruch 58 oder 59, wobei die in den Zellen (15; 25) enthaltene Substanz eine Photochromiesubstanz ist.

FIG. 1

FIG. 2

FIG. 3

FIG. 4

FIG. 5

FIG. 6

FIG. 7

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP O728572 A
- US 20040008319 A
- US 5359444 A
- WO 03077012 A
- WO 0077570 A
- WO 0201281 A
- US 20020176963 A
- US 6327072 B
- US 6597340 B

- FR 2763070
- EP 0676401 A
- EP 0489655 A
- EP 0653428 A
- EP 0407237 A
- FR 2718447
- US 6281366 B
- EP 1204714 A

**Littérature non-brevet citée dans la description**

- **J.P. Pérez - Dunod.** Optique - Fondement et applications. 2004, 262